(19) Europäisches Patentamt
European Patent Office
Office européen des brevets

(11) Publication number: 0 049 910
B1

# (12) EUROPEAN PATENT SPECIFICATION

(45) Date of publication of patent specification: 19.02.86

(51) Int. Cl.[4]: C 08 F 220/10, C 09 D 3/80, C 08 F 220/28, C 08 F 220/54

(21) Application number: 81110766.3

(22) Date of filing: 14.04.80

(60) Publication number of the earlier application in accordance with Art. 76 EPC: 0 020 000

## (54) Copolymers formed from activated ester monomers, and coating compositions containing said copolymers.

(30) Priority: 29.05.79 US 43522

(43) Date of publication of application:
21.04.82 Bulletin 82/16

(45) Publication of the grant of the patent:
19.02.86 Bulletin 86/08

(84) Designated Contracting States:
DE FR GB IT NL SE

(56) References cited:
DE-A-2 338 755
DE-B-1 194 146
FR-A-2 292 721
GB-A- 972 070
GB-A-1 108 383
GB-A-1 242 980
GB-A-1 461 750
US-A-2 701 809
US-A-3 150 118
US-A-3 178 385
US-A-3 285 886
US-A-3 422 139
US-A-4 078 015
CHEMICAL ABSTRACTS, vol. 75, no. 8, 23rd August 1971, page 44, no. 50182e, Columbus Ohio (USA);

(73) Proprietor: AMERICAN CYANAMID COMPANY
Berdan Avenue
Wayne New Jersey 06904 (US)

(72) Inventor: Schirmann, Peter Jude
89 Eunice Avenue
Fairfield Connecticut (US)
Inventor: Parekh, Girish Girdhar
11 Four Seasons Drive
Fairfield Connecticut (US)
Inventor: Blank, Werner Josef
36 Grey Rocks Road
Wilton Connecticut (US)

(74) Representative: Allam, Peter Clerk et al
LLOYD WISE, TREGEAR & CO. Norman House
105-109 Strand
London WC2R 0AE (GB)

(56) References cited:
CHEMICAL ABSTRACTS, vol. 74, no. 12, 22nd March 1971, page 3, no. 54229c, Columbus Ohio (USA);

EP 0 049 910 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to copolymers of ethylenically unsaturated monomers which contain activated ester groups copolymerized with other ethylenically unsaturated monomers. The copolymers are useful in the preparation of coatings and adhesives for metals, woods, textiles and paper, and in the preparation of moldings. The resultant copolymers are readily cross-linked by reaction with compounds containing at least two primary or secondary amine groups, and the present invention further relates to the resultant cross-linked product.

Previously attempts at preparing coatings had centered on using commercially available polymers and developing cross-linking agents for use therewith, i.e. U.S. Patents 3,519,627 and 4,026,855 for example.

Alternatively, prior attempts to prepare polymers, useful with conventional diamines, had been directed to isocyanate and/or epoxide technology. However, these coatings have considerable drawbacks to their commercial use in that the ingredients are highly toxic, or are difficult to handle, or cannot be tailor-made to a sufficient degree to make a family of coatings useful for multiple purposes.

U.S. Patent 3,422,139 describes the use of acrylamidoglycolic acid as a comonomer useful in coatings.

Although the use of activated esters in the preparation of regular copolyamides is well known in the literature, c.f. Ogata et al (Polymer Journal at Vol. 5, p. 186—194, Vol. 6, p. 412—418, Vol. 7, p. 72—78, and Vol. 10, p. 499—504; J. Polymer Science Vol. 14, p. 783—792; and others), these compounds were copolymerized through the ester groups. There has been no attempt to produce monomers wherein the activated ester remains available for subsequent cross-linking with commercially available polyamines.

The present invention provides a copolymer of

(I) a compound of the formula

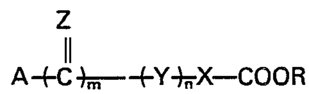

wherein

A is an organic group containing a polymerizable vinyl linkage selected from the group consisting of:

$CH_2=CH-$ ,

$CH_2=C(CH_3)-$ , and

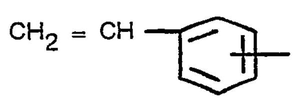 ;

Z is selected from O and S;

m and n are integers each selected from 0 and 1;

Y is a bridging unit selected from:

$-OCH_2CH_2-$,

$-OCH(CH_3)CH_2-$,

$-OCH_2CH_2OCH_2CH_2-$,

$-OCH_2CH_2CO-$,

$-NHCH_2-$,

$-NH-$,

$-NHCOCH_2CH_2-$,

and

$-NHCH_2CH_2CH_2-$;

X is selected from

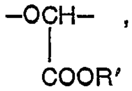 , 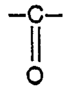 , 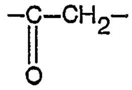 , $-SO_2CH_2-$ , 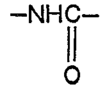 , 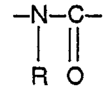 , 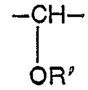 ,

and 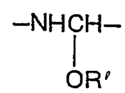 ,

wherein

R' is an alkyl group with 1—8 carbon atoms; and

R is an aliphatic moiety selected from an alkyl group with 1—8 carbon atoms, cycloalkyl with 5—8 carbon atoms and cycloheteroalkyl with 5—8 atoms, each of which is optionally substituted with one or more groups selected from heteroatom, $NO_2$, ether, halogen, alcohol, nitrile and amide groups;

and (II) one or more copolymerizable vinyl monomers.

It will be noted that the —X—COOR group of the monomers (I) may be either directly linked to the group containing a polymerizable vinyl linkage or it may be linked through a bridging unit Y. The presence or absence of this bridging unit has been found to have essentially no influence on the reactivity of the ester groups on the monomers of the present invention. Thus, the use of a bridging unit and/or the particular unit selected from the defined possibilities is basically one of convenience in preparing the monomers.

The exact nature of R which acts as a leaving group during crosslinking of the resultant coating by the action of an amine, has been found to be relatively insignificant so long as it is not too bulky to prevent the approach of the amine. In accordance with this invention, R is an alkyl group with 1—8 carbon atoms, a cycloalkyl group with 5—8 carbon atoms, or a cycloheteroalkyl group containing 5—8 atoms in the ring. These groups may be substituted with heteroatoms, $NO_2$ groups, ethers, halogens, alcohols, nitriles and amides. Thus, R may derive from alcohols such as methanol, ethanol, propanol, 2-nitroethanol, 2-chloroethanol, 2-cyanoethanol, ethyleneglycol, propyleneglycol, monoalkoxyethanols, furfuryl alcohol, tetrahydrofurfuryl alcohol, tetrahydropyran-2-methanol, tetrahydropyran-3-ol, thioethanol and other similar compounds. Most preferably R is selected from methyl, ethyl, propyl, isopropyl, butyl, isobutyl, t-butyl, optionally containing a hydroxyl group.

Suitable monomers for use in the present invention include such as:

Methyl acrylamidoglycolate methyl ether
Ethyl acrylamido-N-oxalate (N-ethyloxalyl acrylamide)
N,N-Bis(ethyloxalyl)acrylamide
N-isopropyl, N-ethyloxalyl-3-propylamino methacrylamide
N-Ethyloxalyl-N'-methyleneaminoacrylamide
Ethyl N-2-ethyloxamatoacrylate
Methyl acrylthiocarbonyloxyacetate (Methyl thiacryloxyacetate)
p-Ethyl oxalyl styrene.

Other ($C_1$—$C_8$) alkyl groups may be substituted for the methyl or ethyl groups in the above-named compounds.

The activated ester monomers used herein may be prepared by standard synthetic methods well known to the art such as esterification, condensation, addition, elimination and other such reactions depending upon the particular monomer to be prepared. The reactions are carried out using conventional acidic or basic catalysts as needed and under conventional reaction conditions. For example, the alkylacrylamidoglycolate alkyl ethers may be prepared by esterifying and etherifying acrylamidoglycolic acid with the desired alcohol or mixture of alcohols; alkyl acryloxyacetates may be prepared by condensing an amine salt of the acrylic acid and an alkyl haloacetate. Alkyl N-ω-alkylozamatoacrylate and N-alkyl-N-alkyloxalylaminoacrylamides and methacrylamides may be prepared by the condensation reaction of an appropriate acid chloride such as alkyl oxalyl chloride or acryloyl chloride with the desired alcohol or amine such as ω-hydroxyalkyloxalate or alkylaminoalkylacrylamide. Other compounds may be similarly prepared.

Optionally the monomers may be transesterified with diols such as ethylene glycol and propylene glycol.

A number of the activated ester monomers used herein are described and claimed in our copending European Application No. 80301179.0 (Publication No. 0020000) from which the present application is divided.

The monomers may be copolymerized with other vinyl monomers according to conventional vinyl polymerization techniques using conventional initiators, temperatures, and other reaction conditions. Suitable comonomers useful herein include the acrylates, methacrylates, styrenes, acrylonitriles, vinyl ethers, vinyl esters and derivatives of these compounds. Specifically useful are alkyl acrylates and methacrylates wherein the alkyl groups have 1—18 carbon atoms, styrene, α-methylstyrene, acrylonitrile, methacrylonitrile, acrylic acid, methacrylic acid, maleic and fumaric acids and esters, functional-containing acrylates and methacrylates such as hydroxy ethylacrylate, acrylamide, methacrylamide, and the like. Most preferably the comonomers are selected from methylacrylate, ethylacrylate, propylacrylate, butylacrylate, 2-ethylhexylacrylate, methylmethacrylate, ethylmethacrylate, butylmethacrylate, acrylic acid, methacrylic acid, maleic acid, vinyl acetate, styrene and acrylonitrile.

Generally the copolymerization is performed in the presence of an inert organic solvent such as ethylacetate, or tetrahydrofuran, or a reactive solvent such as butanol and the like, so that in either case the resultant polymer is ready for use in a coating. The polymer must contain at least 2, and preferably 3 or more, activated ester groups per polymer chain so that cross-linking may be achieved.

The copolymers should contain about 5 to 50 percent by weight of an activated ester monomer and the balance one or more of a comonomer such as those specified above. Preferably, the copolymer contains about 10 to 40 percent of an activated ester monomer and a portion, i.e., up to about 10% of the copolymer contains acidic functionality to catalyze the resultant curing of the polymer with a polyamine compound.

Preferred acidic compounds are acrylic acid, methacrylic acid and acrylamidoglycolic acid alkyl ethers where the alkyl group has 1—8 carbon atoms.

The copolymers so produced may be cured by reaction with compounds containing at least two primary or secondary amine groups per molecule at temperatures from as low as room temperature to 200°C. in a period of less than about 30 minutes, though longer times may be needed at the lower temperatures.

The primary or secondary amine groups must be available for entering into the curing reaction with the activated ester of the monomer. Generally, this means that they are pendantly attached to a compound. For purposes of this invention, pendant amine groups include terminal amine groups, as well as those attached to the compound or to a side chain thereon.

Suitable compounds containing amine groups useful herein include such as:

1,2-ethylenediamine
1,3-propylenediamine
1,2-butylenediamine
1,4-butylenediamine
1,6-hexamethylenediamine
1,7-heptanediamine
diethylenetriamine
xylyldiamine
4,7-dioxadecan-1,10-diamine
1,2-diaminocyclohexane
Bis(p-aminocyclohexyl)methane
2,2-Bis(4-aminocyclohexyl)propane
N,N-Bis(3-aminopropyl)methylamine
Bis(hexamethylenetriamine)

Alternatively, the amine containing compound may be a polymer which contains at least about 1% by weight of pendant amine groups.

Representative polymers containing pendant amine groups can be derived from epoxy and epoxy-modified diglycidyl ethers of bisphenol A structures, various aliphatic polyethylene or polypropylene glycol (diglycidyl ether) adducts, and glycidyl ethers of phenolic resins, such epoxy resins being commercially available and commonly used in the electrocoating field.

Other useful polymers containing pendant amine groups include polyamide resins, for example, condensation products of dimerized fatty acids coreacted with difunctional amine, such as ethylene diamine. Polyamide resins generally are those having a molecular weight between about 500 and 5,000. Further useful polymers containing pendant amine groups include acrylic resins having molecular weight of about 1,000 to about 1,000,000 or more, polyester resins and polyurethane resins both having a molecular weight range of about 500 to about 5,000, and vinyl resins.

Generally, the cross-linking agent is used in an amount to provide a ratio of activated ester groups to amine groups of about 0.3/1 to 3/1.

Coating compositions based upon the activated ester monomer of the present invention may contain, in addition to the copolymer and the polyamine curing agent, conventional coatings additives such as antioxidants, heat stabilizers, flow control agents, pigments, surface active agents, anticorrosion agents, catalysts, and solvents.

To further illustrate the present invention, the following non-limiting examples are offered wherein all parts and percents are by weight unless otherwise specified.

## Example 1

Preparation of Methyl Acrylamidoglycolate Methyl Ether (MAGME)

To a three-necked flask equipped with a stirrer and an extractor filled with a molecular sieve drying agent was added 300 parts acrylamidoglycolic acid, 3000 parts methanol, 0.05 parts phenothiazine, 4.5 parts 98% sulfuric acid and 200 parts chloroform. The mixture was heated to reflux and the distillate was allowed to pass through the extractor for 6½ hours. The mixture was cooled and allowed to stand for 16 hours at which point the mixture was warmed to about 40°C., 19 g of sodium carbonate was added, and the solution was stirred for 2½ hours. The mixture was filtered and vacuum stripped of solvent. The solid residue was extracted with chloroform. Diethyl ether was added to the extract and a polymeric mass precipitated which was discarded. The remaining extract was stripped of solvent to yield 264.2 parts of crude MAGME which was confirmed by chemical analysis.

## Example 2

Preparation of Butyl Acrylamidoglycolate Butyl Ether (BAGBE)

One hundred parts of acrylamidoglycolic acid (AGA); 517 parts butanol, 1 part concentrated sulfuric acid and 0.1 part monomethyl ether of hydroquinone were mixed in a flask equipped with a Dean Stark water trap and a stirrer. The mixture was heated until homogeneous. After 5—10 minutes 100 ml of toluene was added and the mixture was brought to reflux and held 5 hours until the theoretical amount of water was collected by azeotrope.

The toluene and excess butanol were removed under vacuum to yield 173 parts crude BAGBE, as confirmed by chemical analysis.

Example 3

Preparation of Ethyl Acrylamidoglycolate Ethyl Ether (EAGEE)

Eighteen parts of acrylamidoglycolic acid (AGA), 250 parts ethanol, 0.27 parts sulfuric acid and 0.018 g of monomethylether of hydroquinone were added to a flask and the mixture was refluxed for 1½ hours. Toluene (300 parts) was added and the azeotrope was collected and tested for water content. The solvent mixture was replenished and the azeotrope collected until the theoretical amount of water was taken off (4.5 parts). The solvent was then removed under vacuum to yield 24.9 parts crude EAGEE which crystallized readily on standing and was identified by chemical analysis.

Example 4

Preparation of Acrylamidoglycolic acid Methyl Ether (AGME)

45 parts of acrylamidoglycolic acid, 90 parts trimethylorthoformate, 0.045 parts of the mono methyl ether of hydroquinone and 35 parts of methanol are mixed in a flask equipped with a stirrer, condenser and thermometer. The mixture was heated at a bath temperature of 60—65°C. for 24 hours. A small amount of insoluble material was filtered off and discarded. The filtrate was stripped of solvent under vacuum and a rubbery substance was obtained. This material was extracted with ether with stirring for 3 days. The solid which was insoluble in the ether was filtered off and was further extracted with acetone. The acetone was removed to yield 24 g of crude AGME (Mp. 100—102.5).

Example 5

Following the procedure of Example 1, the following additional monomers are prepared:

Methyl acrylamidoglycolate ethyl ether
Ethyl acrylamidoglycolate methyl ether
Cyclohexyl acrylamidoglycolate cyclohexyl ether.

Example 6

Preparation of Polymer A

To a flask equipped with a stirrer, condenser, nitrogen inlet and thermometer was added 78 parts ethyl acetate as solvent, 25.5 parts butyl acrylate, 41 parts methyl methacrylate, 31 parts MAGME from Example 1, 2.5 parts acrylamidoglycolic acid methyl ether from Example 4, 2.0 parts dodecyl mercaptan, and 2.0 parts azobisisobutyronitrile catalyst. The solution was purged with nitrogen for 30 minutes and then heated to 76°C for 2½ hours. The polymer so formed was then used in the preparation of the coatings tested below.

Example 7

Preparation of Polymer B

The procedure of Example 6 was repeated except that tetrahydrofuran (70 parts) was used as the solvent and the following ratio of monomers were used:

30 parts butylacrylate
40 parts methylmethacrylate
30 parts MAGME.

Example 8

Preparation of Polymer C

The procedure of Example 6 was repeated using 45 parts ethyl acetate and the following ratio of monomers:

25.5 parts butylacrylate
37 parts methylmethacrylate
35 parts EMA from Example 2 of European Patent No. 0 020 000B
2.5 parts AGME from Example 3.

Example 9

Following the procedure of Example 6, polymers are prepared from the following monomer compositions using toluene as the solvent:

| Monomer | D | E | F | G | H | I |
|---|---|---|---|---|---|---|
| Butylacrylate | 5.25 | 5.25 | 16.1 | 25 | 25.5 | 25.5 |
| Methylmethacrylate | 20.5 | 19.25 | 29.0 | 39 | — | 41.0 |
| BAGBE | 24.5 | 24.5 | — | — | — | — |
| Methacrylic acid | 1.25 | 2.5 | 1.8 | 5 | 2.5 | 2.5 |
| EAGEE | — | — | 25.0 | — | — | — |
| MAGME | — | — | — | 31 | 31.0 | 31.0 |
| Styrene | — | — | — | — | 21.0 | — |
| Acrylonitrile | — | — | — | — | 20.0 | — |

Example 10

20 parts Polymer B, and 1.16 parts of 1,6-hexamethylene diamine were blended together. A glass tube was filled with the free flowing mixture and after about 112 minutes the mixture set up as a gel. This shows that the polymer has the capability of crosslinking with the diamine at room temperature.

The same mixture after aging for 50 minutes was cast into films on cold rolled steel and baked at 100°C./20 min. These films exhibit solvent resistance as shown in Table I.

Example 11

To 30 parts of Polymer A was added 9.8 parts of butanol and 1.05 parts of 1,3-propylenediamine. This blend was cast into a film on Bonderite 1000 cold rolled steel panels and was shown to cure at room temperature as shown in Table I. An identical blend without the butanol placed in a glass tube showed a gel effect point of 15 minutes at room temperature.

Example 12

To 40 parts of Polymer A was blended 4.1 parts of 1,5-hexamethylenediamine and 13 parts of butanol. The blend was cast into films as in previous examples and was shown to cure at ambient temperatures as well as 50°C. and 100°C. (Table I).

Example 13

Polymer A was cast into a film on cold rolled steel panels without adding any diamine and was baked at 100°C. for 20 minutes. As can be seen from Table I no cure was observed even after allowing the panels to age up to 60 days at room temperature.

Example 14

To 15 parts Polymer C was added 11.4 parts of ethyl acetate and 2.3 parts of 1,6-hexamethylenediamine. This blend was cast into films on cold rolled steel panels and baked at 100°C. for 20 minutes. As can be seen from Table I the cure of the coating continued after the initial bake to produce excellent solvent resistance.

Example 15

Following the procedures of Examples 10 to 14 additional coatings are prepared from the polymers of Example 9.

TABLE I
Properties of Coatings

| Example | Gel Effect Point (min.) | Initial Cure Conditions | Film Properties: Thick | Film Properties: Khn | Film Properties: MEK Rubs | Post Cure: Days At RT | Post Cure: Khn | Post Cure: MEK Rubs | Post Cure: Days At RT | Post Cure: Khn | Post Cure: MEK Rubs |
|---|---|---|---|---|---|---|---|---|---|---|---|
| 10 | 112 | ambient; 24 hrs. | $2.54\times10^{-3}$ | 3 | 2 | | | | 30 | 11.4 | 200+ |
| 11 | 15 | ambient; 24 hrs. | $3.81\times10^{-3}$ | 5.7 | 30 | 5 | 8.0 | 80 | | 12.1 | 200+ |
| 12 | 20 | ambient; 24 hrs. | $3.81\times10^{-3}$ | | | 1 | 1 | 200+ | 14 | 10.6 | 200+ |
| | | 50°C., 20 min. | $3.05\times10^{-3}$ | 2 | 200+ | 5 | 4.6 | 200+ | 14 | 10.5 | 200+ |
| | | 100°C., 20 min. | $2.29\times10^{-3}$ | 12.8 | 200+ | 5 | 13.1 | 200+ | 14 | 14.2 | 200+ |
| 13 | — | 100°C., 20 min. | $2.54\times10^{-3}$ | 0 | 2 | | | | 60 | | 2 |
| 14 | 2400 | 100°C., 20 min. | $5.08\times10^{-3}$ | | 55 | 5 | 4.9 | 200+ | 14 | 8.2 | 200+ |

Note: Khn = Knoop Takon Hardness
Thick = Thickness of films in cm.

Example 16

Preparation of Ethyl N-2-ethyloxamatoacrylate

To a mixture of 500 parts ethanolamine in methylene chloride (900 ml), cooled to −70°C., was added dropwise 2405 parts diethyloxalate. After stirring at room temperature for 16 hours, the mixture was filtered, concentrated and purified by chromatography to yield pure ethyl 2-hydroxyethyloxamate. A mixture of the oxamate (77 parts), sodium carbonate (50.2 parts) and an inhibitor in chloroform were cooled to 0°C and acryloylchloride (43.3 parts) was added dropwise. After stirring at 0° for 2 hours and room temperature for 3 hours the mixture was filtered to yield 1011 parts crude ethyl N-2-ethyloxamatoacrylate.

Example 17

Preparation of N-isopropyl-N-ethyl oxalyl-3-aminopropyl methacrylamide (EOMAM)

Sixty-six parts of isopropylaminopropylmethacrylamide was mixed with 400 parts chloroform and 36.4 parts triethylamine. The mixture was cooled to 4°C. and a mixture of ethyl oxalyl chloride (49 parts) in chloroform (100 parts) was added dropwise over 35—45 minutes. The mixture was held at 0—5°C. for ½ hour and then warmed to room temperature overnight. The mixture was filtered, stripped and purified by column chromatography to yield N-isopropyl-N-ethyl oxalyl-3-aminopropylmethacrylamide (99.6 parts). The product was confirmed by chemical analysis.

Example 18

Preparation of polymer from N-isopropyl-N-ethyloxalyl-3-aminopropylmethacrylamide (EOMAM)

The polymerization of Example 6 was repeated with the following reactants:

| | |
|---|---|
| Butyl acrylate | 25 |
| Methyl Methacrylate | 30 |
| EOMAM (from Example 17) | 45 |

The resulting polymer (5 parts) was gelled by 1,3-propylene diamine (.15 parts) within 18 hours or 1,6-hexamethylenediamine (.23 parts) after 45 hours at room temperature.

Example 19

Preparation of N-Ethyl oxalyl-N′-methylene aminoacrylamide

Methoxymethyl acrylamide (19.7 parts), ethyl oxamate (40 parts), sulfuric acid (2 parts), methanol (10.9 parts) and chloroform (350 ml.) were mixed and refluxed for 32 hours. Excess sodium carbonate was added and the mixture was stirred for 3 days. Filtration, stripping, and fractional crystallization yielded 16 parts of the desired product as confirmed by chemical analysis.

Example 20

Preparation N-Ethyl oxalylacrylamide and N,N-Bis(ethyl oxalylacrylamide)

The above monomers are jointly prepared by the condensation reaction of acrylamide with diethyl oxalate or ethyl oxalyl chloride in the presence of potassium tertiary butoxide. The mixture is stirred at room temperature for 1—5 days and the mixed product is purified and each component is separated by chromatography or the mixed product is used to make a polymeric coating.

The present copolymers are also useful in the production of moldings and adhesives by conventional procedures well known to those skilled in the art.

**Claims**

1. A copolymer of

(I) a compound of the formula

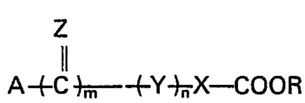

wherein

A is an organic group containing a polymerizable vinyl linkage selected from the group consisting of:

$CH_2 = CH-$ , $CH_2 = C(CH_3)-$ , and 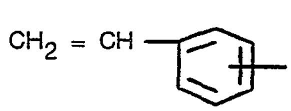 ;

Z is selected from O and S;

m and n are integers each selected from 0 and 1;

Y is a bridging unit selected from:

$-OCH_2CH_2-$,

$-OCH(CH_3)CH_2-$,

$-OCH_2CH_2OCH_2CH_2-$,

$-OCH_2CH_2CO-$,

$-NHCH_2-$,

$-NH-$,

$-NHCOCH_2CH_2-$,

and

$-NHCH_2CH_2CH_2-$;

X is selected from

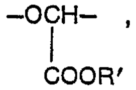 , 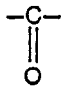 , 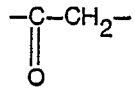 , $-SO_2CH_2-$ , 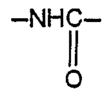 , 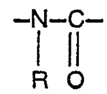 , 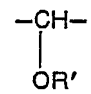 ,

and 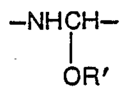 ,

wherein

R′ is an alkyl group with 1—8 carbon atoms; and

R is an aliphatic moiety selected from an alkyl group with 1—8 carbon atoms, cycloalkyl with 5—8 carbon atoms and cycloheteroalkyl with 5—8 atoms, each of which is optionally substituted with one or more groups selected from heteroatom, $NO_2$, ether, halogen, alcohol, nitride and amide groups;

and (II) one or more copolymerizable vinyl monomers.

2. A copolymer of Claim 1, wherein A is vinyl or methyl substituted vinyl and m is 1.

3. A copolymer of Claims 1 or 2, wherein Z is oxygen and m is 1.

4. A copolymer of any preceding claim, wherein X is selected from

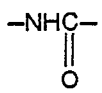 , 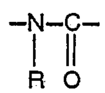 and 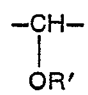 .

5. A copolymer according to any preceding claim, wherein the monomer (I) is an alkyl acrylamidoglycolate alkyl ether wherein the alkyl groups are the same or different and have 1—8 carbon atoms.

6. A copolymer according to any preceding claim, wherein the monomer (I) is selected from methyl acrylamidoglycolate methyl ether, ethyl methacryloxyacetate, butyl acrylamidoglycolate butyl ether, and ethyl acrylamidoglycolate ethyl ether.

7. A copolymer according to any preceding claim, wherein the copolymerizable vinyl monomer (II) is selected from alkyl acrylates and alkyl methacrylates having 1—18 carbon atoms in the alkyl group, styrene, α-methylstyrene, acrylonitrile, methacrylonitrile, acrylic acid, methacrylic acid, maleic acid, fumaric acid, acrylamide, methacrylamide and hydroxyethylacrylate.

8. A copolymer of Claim 7, further containing acrylamidoglycolic acid methyl ether.

9. A copolymer of any preceding claim, which contains up to about 10% by weight of a monomer having acidic functionality.

10. A coating composition comprising:

(1) a copolymer as defined in any preceding claim, the copolymer having at least two ester groups per polymer chain; and

(2) a compound containing at least two primary or secondary amine groups per molecule.

11. A coating composition according to Claim 10, wherein the amine-containing compound is selected from the group consisting essentially of 1,2-ethylenediamine, 1,3-propylenediamine, 1,2-butylenediamine, 1,4-butylenediamine, 1,6-hexamethylenediamine, 1,7-heptanediamine, diethylenetriamine, xylyldiamine, 4,7-dioxadecan-1,10-diamine, 1,2-diaminocyclohexane, bis(*p*-aminocyclohexyl)methane, 2,2-bis(4-aminocyclohexyl)-propane, N,N-bis(3-aminopropyl)methylamine, bis(hexamethylenetriamine) and a polymer containing at least about 1% weight pendant amine groups.

12. The cured product of either one of Claims 10 and 11.

**Patentansprüche**

1. Ein Copolymeres aus
(I) einer Verbindung der Formel

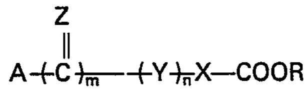

wobei

A für eine organische Gruppe steht, enthaltend eine polymerisierbare Vinylverknüpfung, ausgewählt aus der Gruppe bestehend aus:

$CH_2 = CH-$ ,

$CH_2 = C(CH_3)-$ , und

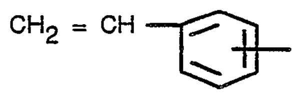 ;

Z ausgewählt ist aus O und S;
m und n ganze Zahlen sind, ausgewählt unter 0 und 1;
Y eine verbrückende Einheit ist, ausgewählt aus

$-OCH_2CH_2-$,
$-OCH(CH_3)CH_2-$,
$-OCH_2CH_2OCH_2CH_2-$,
$-OCH_2CH_2CO-$,
$-NHCH_2-$,
$-NH-$,
$-NHCOCH_2CH_2-$,

und

$-NHCH_2CH_2CH_2-$;

X ausgewählt ist aus

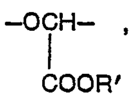 , 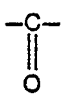 , 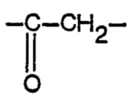 , $-SO_2CH_2-$ , 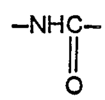 , 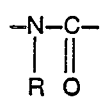 , 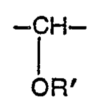 ,

und 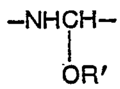 ,

wobei

R' für eine Alkylgruppe mit 1 bis 8 Kohlenstoffatomen steht; und

R für eine aliphatische Einheit steht, ausgewählt aus einer Alkylgruppe mit 1 bis 8 Kohlenstoffatomen, Cycloalkyl mit 5 bis 8 Kohlenstoffatomen und Cycloheteroalkyl mit 5 bis 8 Kohlenstoffatomen, wobei jede dieser Gruppen gegebenenfalls substituiert ist mit einer oder mehreren Gruppen, ausgewählt aus Heteroatom, $NO_2$, Ether, Halogen, Alkohol, Nitrid- und Amidgruppen;

und (II) einem oder mehreren copolymerisierbaren Vinylmonomeren.

2. Copolymeres nach Anspruch 1, wobei A für Vinyl oder Methylsubstituiertes Vinyl steht und m für 1 steht.

3. Copolymeres nach Anspruch 1 oder 2, wobei Z für Sauerstoff steht und m für 1 steht.

4. Copolymeres nach einem der vorstehenden Ansprüche, wobei X ausgewählt ist aus

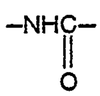 , 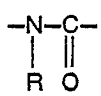 und 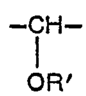 .

5. Copolymeres nach einem der vorstehenden Ansprüche, wobei das Monomere (I) ein Alkylacrylamidoglycolat-Alkylether ist, wobei die Alkylgruppen gleich oder verschieden sind und 1 bis 8 Kohlenstoffatome aufweisen.

6. Copolymeres nach einem der vorstehenden Ansprüche, wobei das Monomere (I) ausgewählt ist aus Methylacrylamidoglycolat-Methylether, Ethylmethacryloxyacetat, Butylacrylamidoglycolat-Butylether und Ethylacrylamidoglycolat-Ethylether.

7. Copolymeres nach einem der vorstehenden Ansprüche, wobei das copolymerisierbare Vinylmonomere (II) ausgewählt ist aus Alkylacrylaten und Alkylmethacrylaten mit 1 bis 10 Kohlenstoffatomen in der Alkylgruppe, Styrol, α-Methylstyrol, Acrylnitril, Methacrylnitril, Acrylsäure, Methacrylsäure, Maleinsäure, Fumarsäure, Acrylamid, Methacrylamid und Hydroxyethylacrylat.

8. Copolymeres nach Anspruch 7, das außerdem Acrylamidoglycolsäure-Methylether enthält.

9. Copolymeres nach einem der vorstehenden Ansprüche, enthaltend bis zu etwa 10 Gew.% eines Monomeren mit saurer Funktionalität.

10. Beschichtungsmasse, umfassend:

1. ein Copolymeres gemäß einem der vorstehenden Ansprüche, wobei das Copolymere mindestens 2 Estergruppen pro Polymerkette aufweist; und

2. eine Verbindung, enthaltend mindestens 2 primäre oder sekundäre Amingruppen pro Molekül.

11. Beschichtungsmasse nach Anspruch 10, wobei die aminhaltige Verbindung ausgewählt ist aus der Gruppe bestehend im wesentlichen aus 1,2-Ethylendiamin, 1,3-Propylendiamin, 1,2-Butylendiamin, 1,4-Butylendiamin, 1,6-Hexamethylendiamin, 1,7-Heptandiamin, Diethylentriamin, Xylyldiamin, 4,7-Dioxadecan-1,10-diamin, 1,2-Diaminocyclohexan, Bis-(p-aminocyclohexyl)-methan, 2,2-Bis(4-aminocyclohexyl)-propan, N,N-Bis(3-aminopropyl)methylamin, Bis(hexamethylentriamin) und einem Polymeren, enthaltend mindestens etwa 1 Gew.% seitenständige Amingruppen.

12. Das gehärtete Produkt aus einer Masse gemäß einem der Ansprüche 10 und 11.

**Revendications**

1. Copolymère de

(I) un composé de formule

$$A-(\overset{\overset{Z}{\|}}{C})_m-(Y)_n-X-COOR$$

dans laquelle

A est un groupe organique contenant une liaison vinylique polymérisable choisi dans le groupe consistant en:

$CH_2 = CH-$ ,

$CH_2 = C(CH_3)-$ , et

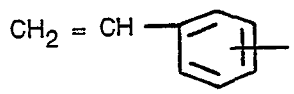 ;

Z est 0 ou S;

m et n sont des nombres entiers choisis chacun parmi 0 et 1;

Y est un motif de pontage choisi parmi:

$-OCH_2CH_2-$,
$-OCH(CH_3)CH_2-$,
$-OCH_2CH_2OCH_2CH_2-$,
$-OCH_2CH_2CO-$,
$-NHCH_2-$,
$-NH-$,
$-NHCOCH_2CH_2-$,
et
$-NHCH_2CH_2CH_2-$;

X est choisi parmi:

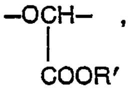 , 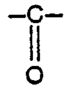 , 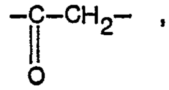 , $-SO_2CH_2-$ , 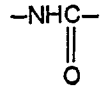 , 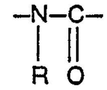 , 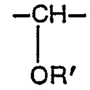 ,

et 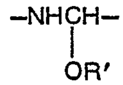 ,

où

R' est un groupe alkyle de 1 à 8 atomes de carbone; et

R est un motif aliphatique choisi entre un groupe alkyle de 1 à 8 atomes de carbone, cycloalkyle de 5 à 8 atomes de carbone et cyclohétéroalkyle de 5 à 8 atomes de carbone, dont chacun est facultativement substitué par un ou plusieurs groupes choisi parmi un hétéroatome, et des groupes $NO_2$, éther, halogéno, alcool, nitrile et amide; et

(II) un ou plusieurs monomères vinyliques copolymérisables.

2. Copolymère selon la revendication 1, dans lequel A est un groupe vinyle ou vinyle substitué par un groupe méthyle et m est égal à 1.

3. Copolymère selon la revendication 1 ou 2, dans lequel Z est l'oxygène et m est égal à 1.

4. Copolymère selon l'une quelconque des revendications précédentes, dans lequel X est choisi parmi

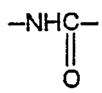 , 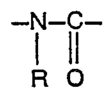 et 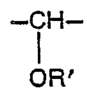 .

5. Copolymère selon l'une quelconque des revendications précédentes, dans lequel le monomère (I) est un éther alkylique d'acrylamidoglycolate d'alkyle dans lequel les groupes alkyle sont identiques ou différents et comportent de 1 à 8 atomes de carbone.

6. Copolymère selon l'une quelconque des revendications précédentes, dans lequel le monomère (I) est choisi parmi l'éther méthylique d'acrylamidoglycolate de méthyle, le méthacryloxyacétate d'éthyle, l'éther butylique d'acrylamidoglycolate de butyle et l'éther éthylique d'acrylamidoglycolate d'éthyle.

7. Copolymère selon l'une quelconque des revendications précédentes dans lequel le monomère vinylique copolymérisable (II) est choisi parmi les acrylates d'alkyle et les méthacrylates d'alkyle ayant de 1 à 18 atomes de carbone dans le groupe alkyle, le styrène, l'alpha-méthylstyrène, l'acrylonitrile, le méthacrylonitrile, l'acide acrylique, l'acide méthacrylique, l'acide maléique, l'acide fumarique, l'acrylamide, le méthacrylamide et l'acrylate d'hydroxyéthyle.

8. Copolymère selon la revendication 7, contenant en outre de l'éther méthylique de l'acide acrylamidoglycolique.

9. Copolymère selon l'une quelconque des revendications précédentes, qui contient jusqu'à environ 10% en poids d'un monomère ayant une fonctionalité acide.

10. Composition de revêtement comprenant:

(1) un copolymère tel que défini dans l'une quelconque des revendications précédentes, le copolymère comportant au moins deux groupes ester par chaîne de polymère; et

(2) un composé contenant au moins deux groupes amine primaire ou secondaire par molécule.

11. Composition de revêtement selon la revendication 10, dans laquelle le composé contenant un groupe amine est choisi dans le groupe consistant essentiellement en 1,2-éthylènediamine, 1,3-propylènediamine, 1,2-butylènediamine, 1,4-butylènediamine, 1,6-hexaméthylènediamine, 1,7-heptanediamine, diéthylènetriamine, xylyldiamine, 4,7-dioxadécane-1,10-diamine, 1,2-diaminocyclohexane, bis(*p*-aminocyclohexyl)méthane, 2,2-bis(4-aminocyclohexyl)-propane, N,N-bis(3-aminopropyl)méthylamine, bis(hexaméthylènetriamine) et un polymère contenant au moins environ 1% en poids de groupes amines pendants.

12. Produit durci selon l'une ou l'autre des revendications 10 et 11.